# FASCICULE DE BREVET EUROPEEN

(11) **EP 0 378 018 B1**
(45) Date de publication et mention de la délivrance du brevet: **28.07.1993**
(21) Numéro de dépôt: 89403426.3
(22) Date de dépôt: 11.12.1989
(51) Int. Cl.: H04L 12/24

(54) **Procédé d'immatriculation d'un organe dans un réseau dont au moins une partie est constituée d'un canal ouvert**
Registrierungsverfahren einer Station in einem zumindest teilweise aus einem offenen Kanal bestehenden Netz
Registration method for a station in a network partly constituted by an open channel

(30) Priorité: 15.12.1988 FR 8816551
(43) Date de publication de la demande: 18.07.1990
(73) Titulaire: LABORATOIRE EUROPEEN DE RECHERCHES ELECTRONIQUES AVANCEES, 92400 Courbevoie (FR)
(72) Inventeur: Saini, Jasjit Singh, F-92045 Paris la Défense (FR); Troian, Pierre, F-92045 Paris la Défense (FR)
(74) Mandataire: Chaverneff, Vladimir

(56) Documents cités:
- EP-A- 0 291 068
- US-A- 3 662 267

## Description

La présente invention se rapporte à un procédé d'immatriculation d'un organe dans un réseau dont au moins une partie est constituée d'un canal ouvert.

Un réseau de transmission, tel qu'un réseau domotique, peut comporter des canaux "ouverts", c'est-à-dire des canaux pouvant être captés par des organes ne faisant pas partie de ce réseau. Ceci est par exemple le cas pour des réseaux à transmission par ondes électromagnétiques à haute fréquence.

Dans un réseau domotique qui peut comporter de tels canaux ouverts, il est important que les différents organes rattachés à ce réseau (appareils électroménagers, appareils audio et vidéo, capteurs de surveillance...) aient chacun une identité ou adresse au sein du réseau unique. En outre, les organes reliés à un canal de transmission ouvert risquent d'interférer avec des organes reliés à un réseau ouvert voisin.

La présente invention a pour objet un procédé d'immatriculation d'organes reliés à un réseau de communication dont au moins une partie est constituée par un canal ouvert, ce procédé devant permettre d'identifier simplement et sans ambiguïté tous les organes reliés à ce réseau, et ceux-là seulement, et de leur attribuer une immatriculation propre à ce réseau et unique pour chaque organe.

Le procédé de l'invention consiste, dans un réseau du type précité et comportant des moyens de supervision de réseau capables d'attribuer à chaque organe du réseau une identité de réseau et éventuellement une identité propre, lors de la mise en service de chaque organe relié au canal ouvert, à initialiser la procédure d'attribution, à vérifier pendant un laps de temps déterminé si un quelconque autre réseau similaire voisin n'entame une telle procédure, à recommencer l'initialisation au bout d'un autre laps de temps dans l'affirmative, ou à poursuivre la procédure dans la négative en envoyant dans le réseau un signal d'attente de demande d'immatriculation, à envoyer à un organe demandeur une information d'identité si cette demande parvient aux moyens de supervision avant l'expiration d'un autre laps de temps déterminé, ou à avorter la procédure dans le cas contraire.

Selon un aspect du procédé de l'invention, l'information d'identité comporte l'identité du réseau et l'identité de l'organe en question.

Selon un autre aspect de l'invention, à la mise en service d'un organe, on initialise la procédure d'attribution soit automatiquement en raccordant cet organe au réseau d'alimentation, soit manuellement en appuyant sur un bouton prévu sur cet organe ou sur son support, cette initialisation déclenchant une temporisation pendant laquelle cet organe se met à l'écoute de l'émission d'un signal d'attente de demande d'immatriculation, l'organe envoyant sa demande d'immatriculation si le signal d'attente lui parvient avant l'expiration de la temporisation, sinon la procédure avorte et doit être recommencée depuis l'initialisation.

Selon encore un autre aspect de l'invention, l'organe envoie sa demande d'immatriculation deux fois de suite, avec un intervalle de temps choisi aléatoirement pour chaque réseau, et si les moyens de supervision constatent que cet intervalle de temps n'est pas respecté, ils font avorter la procédure d'attribution pour la faire recommencer ultérieurement.

Selon encore un autre aspect de l'invention, les informations d'identité sont déterminées à l'aide d'un générateur pseudo-aléatoire à partir de l'identité unique du lieu où est situé le réseau, de préférence l'adresse postale de l'immeuble dans lequel est situé le réseau s'il s'agit d'un réseau domotique et, le cas échéant des renseignements plus précis tels que le nom du propriétaire ou du locataire du lieu.

La présente invention sera mieux comprise à la lecture de la description détaillée d'un mode de réalisation, pris comme exemple non limitatif et illustré par le dessin annexé, sur lequel :
- la figure 1 est un schéma très simplifié de deux réseaux domotiques voisins pour lesquels on peut mettre en oeuvre le procédé de l'invention, et
- les figures 2 à 5 sont des organigrammes du procédé d'immatriculation conforme à l'invention.

L'invention est décrite ci-dessous à titre d'exemple dans l'application à un réseau domotique comportant un canal ouvert, mais il est bien entendu qu'elle n'est pas limitée à un tel réseau, et peut s'appliquer à tout réseau de transmission comportant au moins un canal ouvert dans lequel on doit pouvoir identifier sans aucune ambiguïté un organe déterminé avant son immatriculation afin de pouvoir correspondre uniquement avec lui, au moins dans certaines circonstances (par exemple envoyer un ordre spécifique à cet organe uniquement; ou bien l'identifier automatiquement parmi de nombreux autres organes similaires lorsqu'il désire établir une communication sans risquer de le confondre avec d'autres organes faisant partie d'autres réseaux).

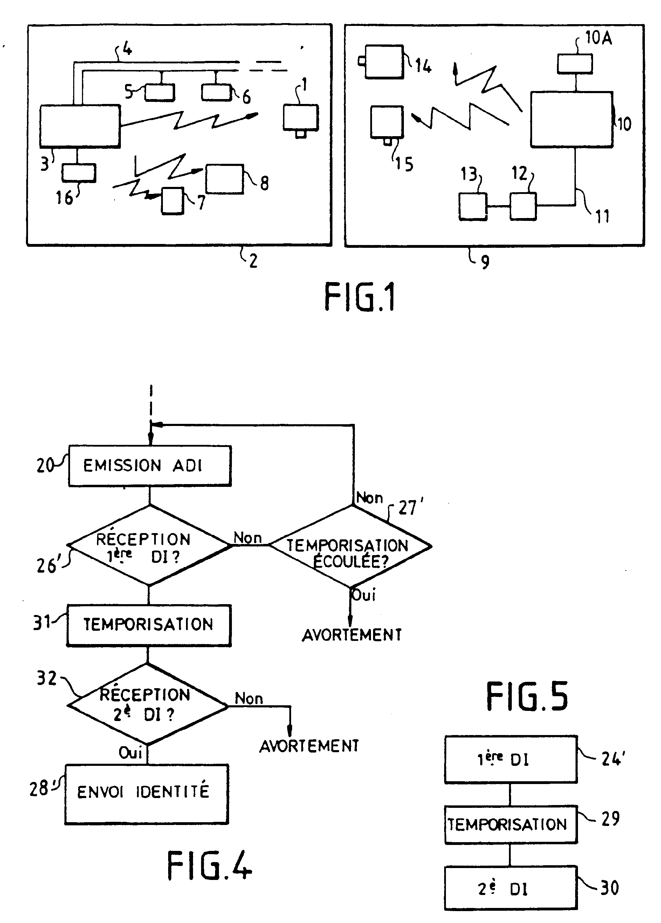

Le réseau domotique, illustré dans la figure 1, dans lequel on veut immatriculer un nouvel organe 1 est situé dans un immeuble 2. Ce réseau comporte essentiellement un poste central de surveillance et de commande 3 et plusieurs canaux de transmission différents entre ce poste central et les organes supervisés par ce poste. Dans le présent exemple, on a représenté deux tels canaux. Un premier canal 4 est constitué par une liaison par paires de fils torsadés reliant des dispositifs de sécurité (capteurs d'intrusion par exemple) à ce poste central. On a représenté deux de ces dispositifs de sécurité sur le dessin référencés 5, 6.

En outre, le poste central 3 commande par liaison H.F. (haute fréquence) des appareils électro-domestiques, tels que des magnétoscopes, des appareils de chauffage, par exemple pour leur mise en route et leur extinction automatiques. On a représenté sur le dessin deux tels appareils électro-domestiques, référencés 7, 8. On suppose que ces appareils sont déjà immatriculés selon le procédé de l'invention qui est expliqué ci-dessous pour l'immatriculation de l'appareil 1 venant d'être mis en place dans l'immeuble 2.

L'immeuble 2 est voisin de plusieurs autres immeubles comportant des réseaux domotiques similaires à canal de transmission H.F. On ne considère ici que les immeubles dont les canaux de transmission H.F. peuvent être captés, au moins occasionnellement, par les appareils reliés au canal H.F. de l'immeuble 2. Parmi ces immeubles voisins, on en a représenté un seul, référencé 9, sur le dessin. Le réseau domotique de l'immeuble 9 comporte un poste central 10 relié à un canal 11, par exemple un câble coaxial. Des appareils 12, 13 sont reliés au canal 11. Par ailleurs, le poste 10 est relié par un canal haute fréquence à d'autres appareils, tels que les appareils 14, 15, seuls représentés sur le dessin. Ce canal haute fréquence peut être capté par les appareils 1, 7, 8 et le poste 3 de l'immeuble 2.

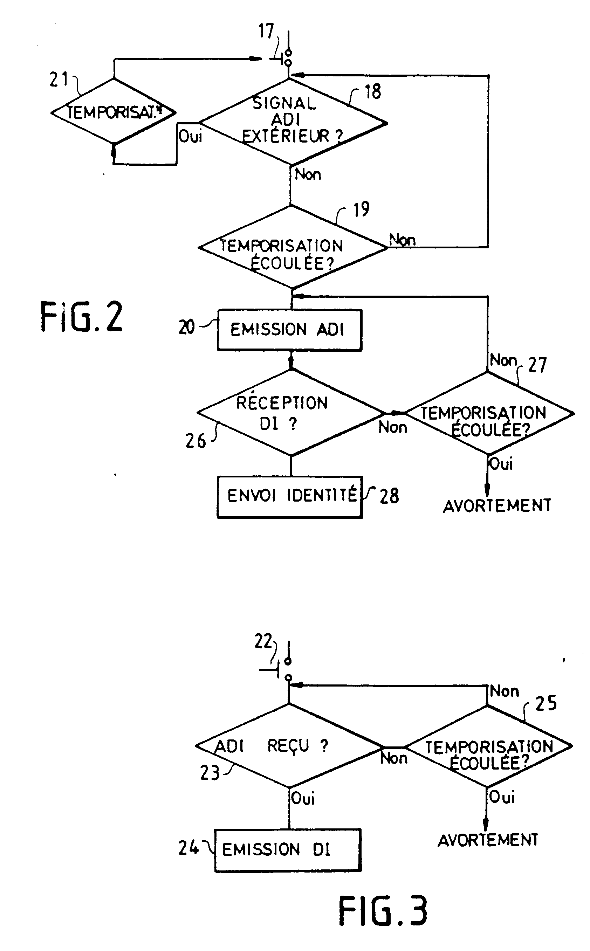

Pour éviter toute interférence avec le réseau H F de l'immeuble 9 lors de la mise en service de l'appareil 1, lorsque ce dernier émet une demande d'immatriculation vers le poste 3, on procède de la façon expliquée ci-dessous en référence aux figures 2 (organigramme du processus côté poste central 3) et 3 (organigramme du processus côté organe 1).

Le processus (voir figure 2) est initialisé, côté poste central 3, à l'aide d'un circuit 16 de supervision de canal de transmission relié au poste central 3 (ou intégré à celui-ci). Un opérateur appuie sur un bouton 17 de ce circuit de supervision qui se met alors (18) à l'écoute d'un éventuel signal "ADI" d'attente de demande d'identité pouvant être émis à ce moment-là par un autre poste central tel que le poste 10. Si, pendant un certain laps de temps (temporisation 19), le circuit 16 ne reçoit aucun signal ADI, il passe à l'étape suivante (20) et émet lui-même un signal ADI comportant de préférence l'identité de son réseau. Dans le présent exemple, la temporisation 19 est d'environ 2 secondes.

Si, avant la fin de la temporisation 19, le circuit 16 reçoit un signal ADI, provenant donc d'un réseau étranger, il déclenche une autre temporisation (21), au bout de laquelle il procède automatiquement à une autre initialisation (à partir de l'étape 18). Cette temporisation 21 doit être de durée suffisante pour permettre audit réseau étranger de réaliser sa propre procédure d'immatriculation. Cette durée est par exemple d'environ 1 minute. Selon une variante, au lieu du déclenchement de la temporisation 21, le circuit 16 peut simplement déclencher une alarme appropriée, et l'opérateur procède lui-même à une autre initialisation dès qu'il le juge possible, en appuyant à nouveau sur le bouton 17.

Le signal ADI émis par le circuit 16 doit normalement être accepté par l'appareil 1. Cet appareil 1 comporte un bouton 22 (voir figure 3) d'initialisation de demande d'identité. L'opérateur enfonce ce bouton dès que l'appareil est installé, après avoir enfoncé le bouton 17. L'enfoncement du bouton 22 provoque la mise en service du récepteur de l'appareil 1. Selon une variante, cette mise en service du récepteur de l'appareil 1 est automatiquement déclenchée dès que l'appareil 1 est branché sur le secteur d'alimentation.

Dès que le récepteur de l'appareil 1 a reçu (23) le signal ADI, émis à l'étape 20, il émet un signal "DI" de demande d'identité (24) comportant l'adresse du réseau si celle-ci a été incluse dans ADI.

Si le récepteur de l'appareil 1 ne reçoit pas de signal ADI, il déclenche aussitôt une temporisation (25). Si, à l'écoulement de cette temporisation 25, le récepteur n'a toujours pas reçu de signal ADI, il y a avortement du processus, et tout doit être recommencé depuis le début. La temporisation 25 est par exemple d'environ 2 secondes.

Du côté du poste central, dès que celui-ci a émis un signal ADI, il se met à l'écoute d'un signal DI (26) , et déclenche une temporisation (27). S'il ne reçoit rien aussitôt après avoir émis le signal ADI, il ré-émet un autre signal ADI et vérifie si un signal DI est aussitôt émis (26). S'il reçoit alors un signal DI, il envoie l'adresse requise à l'appareil 1. S'il ne reçoit toujours pas de signal DI, le cycle émission du signal ADI/attente de réception de signal DI continue, et ce, jusqu'à l'écoulement de la temporisation 27. Si à l'écoulement de la temporisation 27, le poste 3 n'a toujours pas reçu de signal DI, il y a avortement du processus, et tout doit être recommencé depuis le début. La durée de la temporisation 27 est par exemple de 1 minute environ.

S'il y a avortement, le processus peut être recommencé soit manuellement par l'opérateur qui est averti par une alarme et appuie sur le bouton 17 (et le bouton 22 le cas échéant), soit automatiquement à l'initiative du poste 3, au bout d'un laps de temps qui peut par exemple être d'environ 1 minute.

Dans un réseau tel que celui décrit ci-dessus, des conflits peuvent survenir dans le cas où des postes centraux voisins (par exemple 3 et 10) ne peuvent se capter mutuellement car trop éloignés l'un de l'autre, mais les appareils (tels que les appareils 1 et 15) plus proches l'un de l'autre, peuvent capter le poste central étranger en plus de leur propre poste. Dans un tel cas, l'invention prévoit de faire émettre le signal ADI à un niveau plus élevé et les signaux DI ou d'émission d'adresse à un niveau plus faible. Ainsi, si le circuit 16 du poste 3 ne peut alors pas capter le signal ADI du poste 10, il est fortement improbable que le circuit 10A (homologue du circuit 16) du poste 10 puisse capter le signal DI ou le signal d'émission d'adresse, de niveau plus faible, de l'appareil 1. Bien entendu, si le circuit 16 captait le signal ADI du circuit 10A, il passerait à l'étape 21.

Selon une variante avantageuse de l'invention, représentée en figures 4 et 5, l'appareil 1 émet un premier signal DI (24') qui déclenche dans cet appareil une temporisation (29) dont la durée est choisie au hasard pour chaque réseau. A l'écoulement de cette temporisation 29, l'appareil 29 émet un second signal DI (30).

Dans le poste 3, la réception du premier signal DI (26') se passe comme expliqué précédemment (temporisation 27'). Dès que ce premier signal DI est reçu, une temporisation (31) est déclenchée, et sa durée est égale à celle de la temporisation 29. A l'écoulement de la temporisation 31, le poste 3 attend la réception du deuxième signal DI (32). Si ce deuxième signal n'arrive pas aussitôt, il y a avortement du processus, sinon il y a émission de l'identité demandée (28').

Selon un aspect avantageux de l'invention, l'identité demandée peut être élaborée de la façon suivante. A la mise en service du réseau, on introduit dans le poste 3, par exemple à l'aide d'un clavier d'introduction de données, un code d'identité unique, par exemple le code postal alphanumérique de l'appartement 2. Selon un exemple de réalisation, ce code postal peut comporter jusqu'à 30 caractères de 6 bits chacun. Ce code sert alors de crible à un générateur pseudo-aléatoire. On sélectionne une partie des bits (par exemple les 24 bits les moins significatifs) du nombre produit par le générateur pseudo-aléatoire pour l'utiliser en tant qu'identité pour l'appareil à installer. Ainsi, il est pratiquement improbable que les appareils HF de deux réseaux voisins aient la même identité. En outre, en cas de perte de cette identité, il est possible de la re-générer très facilement.

## Revendications

1. Procédé d'immatriculation d'un organe (1) dans un réseau dont au moins une partie est constituée d'un canal ouvert, ce réseau comportant des moyens de supervision (16) de réseau capables d'attribuer à chaque organe du réseau une identité propre, caractérisé par le fait que lors de la mise en service de chaque organe relié au canal ouvert, on initialise la procédure d'attribution en vérifiant (18) si, pendant un laps de temps déterminé (19), un quelconque autre réseau similaire voisin n'entame une telle procédure, à recommencer l'initialisation au bout d'un laps de temps (21) dans l'affirmative, ou à poursuivre la procédure dans la négative en envoyant dans le réseau (20) un signal d'attente de demande d'immatriculation, à envoyer à un organe demandeur (1) une information d'identité (28) si une demande d'immatriculation (26) de cet organe demandeur parvient aux moyens de supervision avant l'expiration d'un autre laps de temps déterminé (27) ou à avorter la procédure dans le cas contraire.

2. Procédé selon la revendication 1, caractérisé par le fait que l'information d'identité comporte l'identité du réseau et l'identité de l'organe en question.

3. Procédé selon la revendication 1 ou 2, caractérisé par le fait qu'à la mise en service d'un organe on initialise automatiquement la procédure d'attribution en raccordant cet organe au réseau d'alimentation.

4. Procédé selon la revendication 1 ou 2, caractérisé par le fait qu'à la mise en service d'un organe on initialise manuellement la procédure d'attribution en appuyant sur un bouton prévu sur cet organe ou sur son support.

5. Procédé selon la revendication 3 ou 4, caractérisé par le fait que l'initialisation à la mise en service de l'organe, déclenche une temporisation (25) pendant laquelle cet organe se met à l'écoute de l'émission d'un signal d'attente de demande d'immatriculation (23), l'organe envoyant sa demande d'immatriculation (24) si le signal d'attente lui parvient avant l'écoulement de la temporisation (25), sinon la procédure avorte et doit être recommencée depuis l'initialisation.

6. Procédé selon l'une des revendications précédentes, caractérisé par le fait que l'organe envoie sa demande d'immatriculation deux fois de suite (24', 30) séparées par un intervalle de temps (29) choisi au hasard pour chaque réseau, et si les moyens de supervision (16) constatent (31, 32) que cet intervalle temps n'est pas respecté, ils font avorter la procédure d'attribution pour la faire recommencer ultérieurement.

7. Procédé selon l'une des revendication précédentes caractérisé par le fait que l'émission du signal d'attente de demande d'identité est faite à un niveau plus élevé que l'émission des signaux de demande d'identité et de communication d'identité.

8. Procédé selon l'une des revendication précédentes, caractérisé par le fait que les informations d'identité sont déterminées à l'aide d'un générateur pseudo-aléatoire à partir de l'identité du lieu où est situé le réseau.

9. Procédé selon la revendication 8, mis en oeuvre pour un réseau domotique, caractérisé par le fait que l'identité du lieu où est situé le réseau est l'adresse postale de l'immeuble dans lequel est implanté le réseau.

## Patentansprüche

1. Verfahren zur Immatrikulation eines Organs (1) in einem Netz, von dem mindestens ein Teil von einem offenen Kanal gebildet wird und das Mittel (16) zur Überwachung des Netzes besitzt, die in der Lage sind, jedem Organ des Netzes eine eigene Identität zuzuweisen, dadurch gekennzeichnet, daß bei der Installierung jedes an den offenen Kanal angeschlossenen Organs das Verfahren darin besteht, daß die Zuweisungsprozedur begonnen wird, indem geprüft wird (18), ob nicht während einer bestimmten Zeitdauer (19) irgendein anderes, ähnliches, benachbartes Netz eine solche Prozedur durchführt, daß die Initialisierung nach einer Zeitdauer (21) im positiven Fall erneut begonnen wird oder daß die Prozedur im negativen Fall fortgesetzt wird, indem in das Netz (20) ein Wartesignal auf eine Immatrikulationsanfrage ausgesandt wird, daß an ein anfragendes Organ (1) eine Identitätsinformation (28) ausgesandt wird, wenn eine Immatrikulationsanfrage (26) von diesem anfragenden Organ vor Ablauf einer weiteren vorbestimmten Zeitdauer (27) bei den Überwachungsmitteln ankommt, oder daß im gegenteiligen Fall die Prozedur abgebrochen wird.

2. Verfahren nach Anspruch 1, dadurch gekennzeichnet, daß die Identitätsinformation eine Identität bezüglich des Netzes und eine Identität bezüglich des betreffenden Organs enthält.

3. Verfahren nach Anspruch 1 oder 2, dadurch gekennzeichnet, daß bei der Installierung eines Organs die Identitätszuweisungsprozedur automatisch ausgelöst wird beim Anschluß dieses Organs an das Stromnetz.

4. Verfahren nach Anspruch 1 oder 2, dadurch gekennzeichnet, daß bei der Installation eines Geräts die Identitätszuweisungsprozedur von Hand ausgelöst wird, indem eine zu diesem Zweck auf diesem Organ oder auf seinem Träger vorgesehene Taste gedrückt wird.

5. Verfahren nach Anspruch 3 oder 4, dadurch gekennzeichnet, daß die Initialisierung bei der Installierung eines Organs eine Zeitverzögerung (25) auslöst, während der dieses Organ auf die Aussendung eines Immatrikulationsanfrage-Wartesignals (23) horcht, wobei das Organ seine Immatrikulationsanfrage aussendet (24), wenn das Wartesignal von ihm vor Ablauf der Zeitverzögerung (25) empfangen wurde, während sonst die Prozedur abgebrochen wird und ab Initialisierung erneut gestartet werden muß.

6. Verfahren nach einem der vorhergehenden Ansprüche, dadurch gekennzeichnet, daß das Organ seine Immatrikulationsanfrage zweimal nacheinander (24', 30) aussendet, und zwar getrennt durch ein Zeitintervall (29), das zufällig für jedes Netz gewählt wird, und daß die Überwachungsmittel (16), wenn sie feststellen (31, 32), daß dieses Zeitintervall nicht respektiert wurde, die Zuweisungsprozedur abbrechen, um sie später erneut zu starten.

7. Verfahren nach einem der vorhergehenden Ansprüche, dadurch gekennzeichnet, daß die Aussendung des Immatrikulationsanfrage-Wartesignals mit einem höheren Sendepegel als die Aussendung der Signale erfolgt, mit denen eine Identitätsanfrage und die Identität mitgeteilt werden.

8. Verfahren nach einem der vorhergehenden Ansprüche, dadurch gekennzeichnet, daß die Identitätsinformation mit Hilfe eines Pseudozufallsgenerators ausgehend von der Identität des Ortes bestimmt werden, an dem das Netz installiert ist.

9. Verfahren nach Anspruch 8 in Anwendung auf ein häusliches Netz, dadurch gekennzeichnet, daß die Identität des Ortes, an dem das Netz installiert ist, die Postadresse des Gebäudes ist, in dem sich das Netz befindet.

## Claims

1. Method of registering an element (1) in a network at least a part of which consists of an open channel, this network including network supervision means (16) capable of attributing a characteristic identity to each element of the network, characterised in that, when each element linked to the open channel is put into service, the attribution process is initialized by checking (18) whether, during a defined time lapse (19) any other similar neighbouring network is embarking on such a procedure, in recommencing the initialization at the end of a time lapse (21) if affirmative, or in following the procedure if negative, by sending to the network (20) a registration request standby signal, in sending to a requesting element (1) an item of identity information (28) if a registration request (26) from this requesting element arrives at the supervision means before the expiry of another defined time lapse (27) or in aborting the procedure in the opposite case.

2. Method according to Claim 1, characterised in that the identity information item includes the identity of the network and the identity of the element in question.

3. Method according to Claim 1 or 2, characterised in that on putting an element into service the attribution procedure is automatically initialized by connecting this element to the supply mains.

4. Method according to Claim 1 or 2, characterised in that on putting an element into service the attribution procedure is manually initialized by pressing on a button provided on this element or on its support.

5. Method according to Claim 3 or 4, characterised in that initialization on putting the element into service triggers a time delay (25) during which this element sets itself to listen for the sending of a registration request standby signal (23), the element sending its registration request (24) if the standby signal arrives before the expiry of the time delay (25), otherwise the procedure aborts and has to be recommenced from the initialization.

6. Method according to one of the preceding claims, characterised in that the element sends its registration request twice in succession (24', 30) separated by a time interval (29) which is chosen at random for each network, and if the supervision means (16) note (31, 32) that this time interval is not respected, they abort the attribution procedure in order to recommence it later.

7. Method according to one of the preceding claims, characterised in that the sending of the identity request standby signal is done at a higher level than the sending of the identity request and identity communication signals.

8. Method according to one of the preceding claims, characterised in that the identity information items are determined with the aid of a pseudo-random generator on the basis of the identity of the place where the network is situated.

9. Method according to claim 8, implemented for a domestic electrical network, characterised in that the identity of the place where the network is situated is the postal address of the building in which the network is installed.
